(19) **Europäisches Patentamt**

**European Patent Office**

**Office européen des brevets**

(11) **EP 1 048 670 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.$^7$: **C07F 7/16**

(21) Anmeldenummer: **00108028.2**

(22) Anmeldetag: **20.04.2000**

(54) **Verfahren zur Herstellung von Organochlorsilanen**

Process for preparing organochlorosilanes

Procédé de préparation d'organochlorosilanes

(84) Benannte Vertragsstaaten:
**DE FR GB**

(30) Priorität: **27.04.1999 DE 19919337**

(43) Veröffentlichungstag der Anmeldung:
**02.11.2000 Patentblatt 2000/44**

(73) Patentinhaber: **Wacker-Chemie GmbH**
**81737 München (DE)**

(72) Erfinder:
• **Kalchauer, Wilfried, Dr.**
**84489 Burghausen (DE)**
• **Straussberger, Herbert**
**84561 Mehring/Öd (DE)**
• **Streckel, Willibald**
**84561 Mehring/Öd (DE)**
• **Goetze, Ulrich, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**US-A- 4 504 596      US-A- 4 504 597**
**US-A- 4 554 370**

## Beschreibung

Die Erfindung betrifft ein Verfahren zur Direktsynthese von Methylchlorsilanen mit einer Kontaktmasse, welche pyrogene Kieselsäure enthält.

Verfahren zur Herstellung Methylchlorsilanen durch Umsetzung von Silicium mit Chlormethan in der Direktsynthese nach Müller-Rochow im Gegenwart von geeigneten Katalysatoren und Katalysatorkombinationen sind bereits bekannt. Beispielsweise ist in US-Re. 33.452 ein Direktsyntheseverfahren mit einer Katalysatorkombination aus den Elementen oder den Verbindungen von Kupfer und der Co-Katalysatoren Zink und Zinn beschrieben. Das Mengenverhältnis der Katalysatoren Kupfer, Zink und Zinn zueinander hat im Verfahren einen starken Einfluß auf das Verfahren, insbesondere auf die Produktivität und Selektivität, während die Form, wie Metall, Legierungen oder Verbindungen, in der die Katalysatoren in die Kontaktmasse eingebracht werden, von untergeordneter Bedeutung ist.

In US 4,504,596 und US 4,504,597 ist die Direktsynthese von Methylchlorsilanen mit einer Kontaktmasse beschrieben, welche Silicium, Chlormethan und einen speziellen Kupferkatalysator enthält. Der Katalysator wird durch Zerkleinern einer Mischung aus Kieselsäure und vorzerkleinertem Kupfer oder Kupfersalz, gegebenenfalls zusammen mit Promotoren in einer Hochenergie-Zerkleinerungseinheit hergestellt. Durch diese Behandlung wird das Kristallgefüge verändert.

In US 4,554,370 ist ein Verfahren beschrieben, bei dem Silicium mit Chlormethan in Gegenwart von Kupfer-I-Chlorid als Katalysator und von pyrogener Kieselsäure als anti-Agglomeratmittel zu Methylchlorsilanen umgesetzt wird. Durch die Mitverwendung von pyrogener Kieselsäure soll die Bildung von Agglomeraten in der Kontaktmasse, der Mischung aus Silicium und Katalysatoren, verhindert werden.

Ziel der Direktsynthese ist, möglichst kostengünstig und möglichst umweltschonend Dimethyldichlorsilan, welches beispielsweise für die Herstellung von linearen Polysiloxanen benötigt wird, in hohen Ausbeuten und mit einem hohen Raum-/Leistungsverhältnis herzustellen. D.h. bei vergleichbarer Selektivität und Reaktivität ist ein Verfahren, das geringere Mengen an Katalysatoren benötigt kostengünstigen und auch umweltschonender, da die gebrauchten Katalysatoren entweder wieder aufgearbeitet oder in eine deponierfähige Form überführt werden müssen. Aufgabe der vorliegenden Erfindung war es, ein Verfahren zur Direktsynthese von Methylchlorsilanen nach Müller-Rochow bereitzustellen, bei dem unter Beibehaltung der Reaktivität und der Selektivität die Konzentration an Kupferkatalysator oder Promotor in der Kontaktmasse reduziert werden kann.

Gegenstand der Erfindung ist ein Verfahren zur Direktsynthese von Methylchlorsilanen durch Umsetzung von Chlormethan mit einer Kontaktmasse, welche Silicium, Kupferkatalysator, Zinkpromotor und pyrogene Kieselsäure enthält.

Durch den Zusatz von pyrogener Kieselsäure zur Kontaktmasse kann die Konzentration an Kupferkatalysator oder Zinkpromotor reduziert werden, ohne. daß die Reaktivität und/oder die Selektivität negativ beeinflußt werden.

Die beim erfindungsgemäßen Verfahren zusätzlich zum Einsatz kommende pyrogene Kieselsäure ist, da sie nur aus $SiO_2$ besteht, ohne weitere Behandlung umweltverträglich.

Das Verfahren kann diskontinuierlich oder kontinuierlich durchgeführt werden, in der industriellen Produktion wird nur die kontinuierliche Ausführungsform angewendet. Kontinuierlich bedeutet, daß die Menge an abreagiertem Silicium und mit dem Reaktionsstaub ausgetragenen Katalysatoren und Promotoren laufend nachdosiert werden, vorzugsweise als vorgemischte Kontaktmasse.Die kontinuierliche Direktsynthese wird bevorzugt in Wirbelschichtreaktoren durchgeführt, in denen Chlormethan gleichzeitig als Fluidisierungsmedium und Reaktant eingesetzt wird.

Das benötigte Silicium wird zuvor zu einem Pulver vermahlen und mit Kupferkatalysator und Promotoren zur Kontaktmasse vermischt. Vorzugsweise wird Silicium in einer Korngröße von höchstens 700 µm, besonders bevorzugt in einer Korngröße höchstens 500µm und mindestens 20 µm eingesetzt. Das eingesetzte Silicium weist üblicherweise einen Reinheitsgrad von > 98% auf.

Eine Produktionskampagne der kontinuierlichen Direktsynthese wird mit der Induktionsphase begonnen. Mit Beginn der Induktionsphase wird Methylchlorid in die erhitzte Kontaktmasse geleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Silicium und gegebenenfalls Katalysatoren und Promotoren/Co-Katalysatoren werden laufend nachdosiert. Die Produktionskampagne endet, wenn kein Chlormethan mehr in die Kontaktmasse eingeleitet wird.

Beim kontinuierlichen Betrieb eines Reaktors fallen in einer Produktionskampagne nach einer weitgehend stabilen Produktionsphase die Produktionsraten bezogen auf das Zielprodukt Dimethyldichlorsilan ab. Deshalb muß die Produktionskampagne nach einer bestimmten Zeit beendet werden. Eine Produktionskampagne dauert meist nur einige Tage bis mehrere Wochen. Der Reaktor wird nach Beendigung einer Produktionskampagne entleert, neu mit Silicium, Kupferkatalysator und Promotoren/Co-Katalysatoren befüllt und wieder auf Reaktionsbedingungen gebracht.

Bei der Direktsynthese verlassen nicht umgesetztes Chlormethan, die gasförmigen Methylchlorsilane und gegebenenfalls mitgerissene Partikel den Reaktor. Die mitgerissenen Partikel bestehen aus abreagierten Siliciumkörnen, feinen Siliciumkörnern, Katalysatoren und Promotoren/Co-Katalysatoren. Über einen oder mehrere Cyclone kann

man, falls erwünscht, die mitgerissenen Partikel vom Gasstrom abtrennen, wobei große mitgerissene Partikel aus der Kontaktmasse wieder in den Reaktor zurückgeführt werden können. Das Silan wird anschließend von restlichen Staubanteilen und nicht umgesetzten Chlormethan abgetrennt und einer Destillation zugeführt. Gereinigtes, nicht umgesetztes Chlormethan kann wieder in den Reaktor eingespeist werden.

Das Verfahren wird bevorzugt in einem Wirbelschichtreaktor, vorzugsweise im Temperaturbereich von 250 bis 400°C, insbesondere bei 250 bis 360°C durchgeführt. Weil dies den geringsten Aufwand erfordert, wird das Verfahren meist beim Druck der umgebenden Atmosphäre, also bei etwa 0,1 MPa bis 0,5 MPa durchgeführt, es können aber auch höhere Drücke angewandt werden.

Beim Verfahren können auch Inertgase wie beispielsweise Stickstoff oder Argon eingesetzt werden. Vorzugsweise wird kein Inertgas verwendet.

Die Menge des Gasstromes wird in einer bevorzugten Ausführungsform so gewählt, daß im Reaktor eine Wirbelschicht aus Kontaktmasse und Gas gebildet wird. Die Mischung aus Silicium, Katalysatoren, Promotoren und pyrogener Kieselsäure wird als Kontaktmasse bezeichnet. Nicht umgesetztes Chlormethan und gegebenenfalls Inertgas und die gasförmigen Methylchlorsilane verlassen den Reaktor. Über einen oder mehrere Cyclone kann. man, falls erwünscht, die mitgerissenen Partikel vom Gasstrom abtrennen, wobei große mitgerissene Partikel aus der Kontaktmasse wieder in den Reaktor zurückgeführt werden. Die Zubereitung der Kontaktmasse erfolgt durch einfaches Mischen der Einzelkomponenten bei Raumtemperatur. Eine Behandlung der Kontaktmasse vor dem Einbringen in den Reaktor ist möglich, wird aber in der bevorzugten Ausführungsform nicht durchgeführt.

In einer besonders bevorzugten Ausführungsform wird die pyrogene Kieselsäure zuerst mit dem Kupferkatalysator und/oder dem Zinkpromotor gemischt, da dadurch die Rieselfähigkeit des Katalysatorsystems erhöht und in Abhängigkeit von der eingesetzten Kieselsäure die hygroskopische Wirkung verschiedener Katalysatorkomponenten reduziert und somit die Handhabbarkeit stark verbessert wird.

Beim erfindungsgemäßen Verfahren wird (a) die Form des Kupfers vorzugsweise ausgewählt aus metallischem Kupfer, Kupferlegierungen, Kupferoxid und Kupferchlorid. Kupferoxid kann beispielsweise Kupfer in Form von Kupferoxid-Gemischen und in Form von Kupfer(II)oxid sein. Kupferchlorid kann in Form von CuCl oder in Form von $CuCl_2$ eingesetzt werden, wobei auch entsprechende Mischungen möglich sind. In einer bevorzugten Ausführungsform wird das Kupfer als Kupferoxid und/oder als CuCl eingesetzt.

Vorzugsweise werden 0,3 bis 10 Gew.%, insbesondere 0,5 bis 7 Gew.% Kupferkatalysator, bezogen auf metallisches Kupfer und Silicium verwendet, besonders bevorzugt sind 0,5 bis 4,5 Gew.%.

Beim erfindungsgemäßen Verfahren wird (b) Zink vorzugsweise in Form von metallischem Zink, auch als Legierung mit Kupfer und gegebenenfalls weiteren Promotoren, Zinkoxid, oder Zinkchlorid eingesetzt. Die Menge an eingesetztem Zink beträgt vorzugsweise 0,3 bis 60 Gew.%, insbesondere 0,8 bis 40 Gew.%, bezogen auf Kupfer und Zink als Metall, besonders bevorzugt sind 1 bis 20 Gew.%.

Beim erfindungsgemäßen Verfahren können neben Zink weitere Promotoren (c) eingesetzt werden, die vorzugsweise ausgewählt werden aus Phosphor, Cäsium, Barium, Eisen und insbesondere Zinn und Antimon. Antimon und/oder Zinn (c) werden vorzugsweise als Metalle oder Legierungen eingesetzt. Die Menge an eingesetztem Antimon und/oder Zinn beträgt bevorzugt in Summe 200 bis 8000 ppm, insbesondere 300 bis 4000 ppm, bezogen aus das eingesetzte Kupfer, berechnet als Metall, besonders bevorzugt sind 500 bis 3000 ppm Antimon und/oder Zinn.

Beim erfindungsgemäßen Verfahren wird (d) pyrogene Kieselsäure, vorzugsweise pyrogene Kieselsäure, die durch eine Oberflächenbehandlung hydrophobiert wurde, eingesetzt. Die Oberflächenbehandlung kann beispielsweise mit Organosilanen bzw. -siloxanen oder durch Verätherung von Hydroxylgruppen zu Alkoxygruppen erfolgen. Vorzugsweise weist die pyrogene Kieselsäure eine BET-Oberfläche von mindestens 50 $m^2$/g auf. Pyrogene Kieselsäuren mit und ohne Oberflächenbehandlung sind käuflich erhältlich, z.B. bei der Wacker-Chemie GmbH unter der Marke Wakker® HDK. Die Menge an eingesetzter pyrogener Kieselsäure beträgt vorzugsweise 0,3 bis 5 Gew.% bezogen auf die Summe an eingesetzten Katalysatoren (a - c), besonders bevorzugt werden 0,5 bis 2,5 Gew.% eingesetzt. Geringere wie auch höhere Konzentrationen an pyrogener Kieselsäure sind möglich, wobei höhere Konzentrationen keine weiteren Verbesserungen liefern und bei geringeren Konzentrationen der Vorteil des Verfahrens reduziert ist.

Bei einer bevorzugten Ausführungsform des Verfahrens wird mindestens eine der Katalysatorkomponenten aus (a-b) in einer nicht metallischen Form eingesetzt, besonders bevorzugt ist jene Ausführungsform, bei der beide Katalysatorkomponenten aus (a) und (b) in einer nicht metallischen Form zum Einsatz kommen.

In den nachfolgenden Beispielen sind, falls jeweils nicht anders angegeben,

    a) alle Mengen auf die Masse bezogen;
    b) alle Drücke 0,10 MPa (abs.);
    c) alle Temperaturen 20°C;
    d) Silan M2 = Dimethyldichlorsilan

**Beispiele**

Die Ergebnisse bei der Umsetzung von Silicium mit Chlormethan in Gegenwart von geeigneten Katalysatoren hängen neben der Zusammensetzung der Kontaktmasse auch vom Aufbau der Versuchsanlage und der Versuchsdurchführung ab. Um die beiden letztgenannten Parameter zu eliminieren und um die Vorteile der Erfindung eindeutig aufzeigen zu können, wurden die, in den nachstehenden Beispielen dargestellten Versuche nach folgender standardisierter Vorgehensweise durchgeführt.

Siliciumpulver:

Käuflich erhältliches Siliciummetall mit folgenden Hauptverunreinigungen: Al 0,20%, Fe 0,27%, Ca 0,04%; gemahlen und gesiebt auf eine Korngröße im Bereich von 70 bis 240 µm.

Kupferoxid: Hergestellt nach US-A-5,306,328, Beispiel 5. Pyrogene Kieselsäure: Verschiedene Typen, käuflich erhältlich bei der Wacker-Chemie unter der Marke Wacker® HDK.

Alle anderen Chemikalien sind im Chemikalienhandel käuflich erhältlich, z.B. bei Fluka Chemie GmbH, Deutschland.

Versuchsanlage:

Labor-Wirbelschichtreaktor (senkrechtes Glasrohr mit einem Innendurchmesser von 25 mm und einer.Höhe von 500 mm) mit Heizwicklung, Gasverteilerfritte, Destillationsbrücke mit Solekühlung und Vorlagekolben.

Standardisierte Vorgehensweise:

[A] g Kupferkatalysator, [B] g Zink-Cokatalysator, 8 mg Zinnpulver und [C] g Wacker-HDK werden innig vermischt, mit 120g Silicium durchmischt, in den Reaktor gefüllt und unter einem Stickstoffstrom von 40 l/h auf 340°C erwärmt. Anschließend werden 40 l/h Chlormethan durch den Reaktor geleitet und die Kontaktmasse auf 395°C erwärmt. Nach einer Induktionszeit, im Bereich von 2 bis 30 Minuten beginnt die Silanbildung, die Reaktionstemperatur wird auf 360°C reduziert und 50 ml Methylchlorsilane werden aufgefangen (Startphase). Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane in der Produktionsphase}}{\text{Oberfläche des Siliciums x Minuten in der Produktionsphase}}$$

Die Silanzusammensetzung der 30 ml Methylchlorsilane wurde mittels GC-Analyse in Gewichtsprozent ermittelt.

**Beispiel 1** (Nachweis, daß durch eine Abmischung des Zink-Cokatalysators - in Form von $ZnCl_2$ - mit HDK die Katalysator-Handhabbarkeit stark verbessert wird.)

$ZnCl_2$ wurde jeweils mit 0 und 1,0 Gew.% Wacker®-HDK-H20 und Wacker®-HDK-H2000 (hydrophobe, pyrogene Kieselsäuren) innig vermischt und offen bei Raumtemperatur stehen gelassen.

Ergebnisse:

Ohne HDK Zusatz verklumpt $ZnCl_2$ auf Grund der hygroskopischen Eigenschaften nach nach 3 - 4 Stunden vollständig.

Mit 1% H-20 Zusatz zum $ZnCl_2$ ist das Material auch noch nach 4 Tagen Lagerung an Luft voll rieselfähig.

Mit 1% H-2000 Zusatz zum $ZnCl_2$ ist das Material auch noch nach 30 Tagen Lagerung an Luft voll rieselfähig.

**Beispiele 2 - 9** (Nachweis, daß im Katalysatorsystem CuCl/$ZnCl_2$/Sn durch den Zusatz von pyrogener Kieselsäure die Konzentration der Zn-Komponente reduziert werden kann, ohne gleichzeitig die Reaktivität verringert wird. Ohne HDK Zusatz ist dieser Effekt nicht zu beobachten). Durchführung wie im allgemeinen Teil beschrieben, Beispiele 2-5 sind nicht erfindungsgemäß,

| Beispiel | g[CuCl] | g[$ZnCl_2$] | g[HDK-H2000] | PR2 | % Silan M2 |
|---|---|---|---|---|---|
| 2 | 5 | 1,7 | 0 | 63 | 81,2 |
| 3 | 5 | 1,0 | 0 | 55 | 85,5 |

(fortgesetzt)

| Beispiel | g[CuCl] | g[ZnCl$_2$] | g[HDK-H2000] | PR2 | % Silan M2 |
|---|---|---|---|---|---|
| 4 | 5 | 0,5 | 0 | 46 | 85,3 |
| 5 | 5 | 0,1 | 0 | PR2 nach 5 Stunden nicht erreicht | |
| 6 | 5 | 1,7 | 0,07 | 64 | 81,2 |
| 7 | 5 | 1,0 | 0,06 | 62 | 83,9 |
| 8 | 5 | 0,5 | 0,06 | 65 | 85,1 |
| 9 | 5 | 0,1 | 0,05 | 64 | 84,5 |

**Beispiele 10 - 13** (Nachweis, daß im Katalysatorsystem CuO/ZnO/Sn durch den Zusatz von pyrogener Kieselsäure die Konzentration der Zn-Komponente reduziert werden kann, ohne gleichzeitig die Reaktivität verringert wird. Ohne HDK Zusatz ist dieser Effekt nicht zu beobachten). Durchführung wie im allgemeinen Teil beschrieben, Beispiele 10-11 sind nicht erfindungsgemäß.

| Beispiel | g[CuO] | g[ZnO] | g[HDK-H2000] | PR2 | % Silan M2 |
|---|---|---|---|---|---|
| 10 | 6 | 1 | 0 | 58 | 84,9 |
| 11 | 6 | 0,1 | 0 | PR2 nach 5 Stunden nicht erreicht | |
| 12 | 6 | 1 | 0,07 | 61 | 84,5 |
| 13 | 6 | 0,1 | 0,06 | 65 | 84,6 |

**Beispiele 14 - 19** (Nachweis, daß im Katalysatorsystem CuCl/ZnCl$_2$/Sn durch den Zusatz von pyrogener Kieselsäure die Konzentration des Cu-Katalysators reduziert werden kann, ohne gleichzeitig die Reaktivität verringert wird. Ohne HDK Zusatz ist dieser Effekt nicht zu beobachten). Durchführung wie im allgemeinen Teil beschrieben, Beispiele 14-16 sind nicht erfindungsgemäß, die HDK-Konzentrationen wurden ebenfalls variiert.

| Beispiel | g[CuCl] | g[ZnCl$_2$] | g[HDK-H2000] | PR2 | % Silan M2 |
|---|---|---|---|---|---|
| 14 | 7,3 | 1,7 | 0 | 65 | 81,4 |
| 15 | 6,0 | 1,7 | 0 | 64 | 79,5 |
| 16 | 4,0 | 1,7 | 0 | 48 | 72,6 |
| 17 | 7,3 | 1,7 | 0,09 | 68 | 81,5 |
| 18 | 6,0 | 1,7 | 0,16 | 97 | 82,0 |
| 19 | 4,0 | 1,7 | 0,06 | 67 | 75,4 |

**Beispiele 20 - 24** (Nachweis, daß im Katalysatorsystem CuO/ZnCl$_2$/Sn bei reduzierter Zn-Menge die HDK-Type einen Einfluß auf die Erhaltung der Reaktivität hat). Durchführung wie im allgemeinen Teil beschrieben, Beispiele 20-21 sind nicht erfindungsgemäß.
H-20 und H2000 sind hydrophobe, pyrogene Kieselsäuren, N-20 ist eine hydrophile, pyrogene Kieselsäure.

| Beispiel | g[CuO] | g[ZnCl$_2$] | g[HDK] | PR2 | % Silan M2 |
|---|---|---|---|---|---|
| 20 | 6 | 1,7 | 0 | 68 | 80,8 |
| 21 | 6 | 0,3 | 0 | 50 | 81,4 |
| 22 | 6 | 0,3 | 0,06 [N-20] | 58 | 80,8 |
| 23 | 6 | 0,3 | 0,06 [H-20] | 62 | 80,8 |
| 24 | 6 | 0,3 | 0,06 [H-2000] | 68 | 82,2 |

**Patentansprüche**

1.  Verfahren zur Direktsynthese von Methylchlorsilanen durch Umsetzung von Chlormethan mit einer Kontaktmasse, welche Silicium, Kupferkatalysator, Zinkpromotor und pyrogene Kieselsäure enthält.

2.  Verfahren nach Anspruch 1, wobei das Verfahren kontinuierlich durchgeführt wird.

**3.** Verfahren nach Anspruch 1 oder 2, bei dem die Form des Kupfers aus metallischem Kupfer, Kupferlegierungen, Kupferoxid und Kupferchlorid ausgewählt wird.

**4.** Verfahren nach Anspruch 1 bis 3, bei dem neben Zink weitere Promotoren eingesetzt werden, die ausgewählt werden aus Zinn und Antimon.

**Claims**

**1.** Process for the direct synthesis of methylchlorosilanes by reacting chloromethane with a catalyst composition comprising silicon, copper catalyst, zinc promotor and pyrogenic silicic acid.

**2.** Process according to Claim 1, where the process is carried out continuously.

**3.** Process according to Claim 1 or 2, in which the form of the copper is selected from metallic copper, copper alloys, copper oxide and copper chloride.

**4.** Process according to Claims 1 to 3, in which, besides zinc, further promotors selected from tin and antimony are employed.

**Revendications**

**1.** Procédé pour la synthèse directe de méthylchlorosilanes par la réaction du chlorométhane avec une masse catalytique qui contient du silicium, un catalyseur à base de cuivre, un activateur à base de zinc et de l'acide silicique pyrogéné.

**2.** Procédé selon la revendication 1, dans lequel le procédé est effectué en continu.

**3.** Procédé selon la revendication 1 ou 2, dans lequel la forme du cuivre est choisie parmi le cuivre métallique, des alliages de cuivre, l'oxyde de cuivre et le chlorure de cuivre.

**4.** Procédé selon l'une quelconque des revendications 1 à 3, dans lequel, outre le zinc, on utilise d'autres activateurs qui sont choisis parmi l'étain et l'antimoine.